# EUROPEAN PATENT APPLICATION

(11) **EP 1 168 756 A1**
(43) Date of publication of application: **02.01.2002**
(21) Application number: 00850111.6
(22) Date of filing: 20.06.2000
(51) Int. Cl.: H04L 29/06, H04L 12/56, H04L 12/64

(54) **Internet telephony gateway for multiplexing only calls requesting same QoS preference**

(71) Applicant: Telefonaktiebolaget L M Ericsson (Publ), 126 25 Stockholm (SE)
(72) Inventor: Szabo, István, 1037 Budapest (HU)
(74) Representative: Bjelkstam, Peter

(57) **Abstract**

In a method and a system relating to an Internet Protocol (IP) telephony gateway, the gateway is provided with a function dividing incoming calls into different classes. The gateway only multiplexes voice calls belonging to the same class into the same IP packet. Thus, a subscriber can indicate its Quality of Service preference in the call/session level signalling. The IP telephony gateway receives the call and only multiplexes calls into the same IP packet if they have belong to the same Quality of Service class. Hereby a more flexible multiplexing service capable of offering different Quality of Service levels to different subscribers connected to the same IP telephony gateway is obtained.

## Description

### TECHNICAL FIELD

The present invention relates to a method and a system for setting up a connection in an Internet Protocol (IP) network. In particular the present invention relates to a method and a system for improving the service to subscribers in an Internet Protocol (IP) telephony network.

### BACKGROUND OF THE INVENTION AND PRIOR ART

Today there is a demand for services offering real time traffic over an Internet Protocol (IP) network. For example when establishing a connection for IP-telephony, the users demand real time traffic.

In order to meet this demand a transport protocol termed RTP has been developed for carrying real time traffic over an Internet Protocol (IP) network. The RTP is described in H.Schulzrinne et al.: "RTP: A Transport Protocol for Real-Time Applications, RFC 1889, January, 1996.

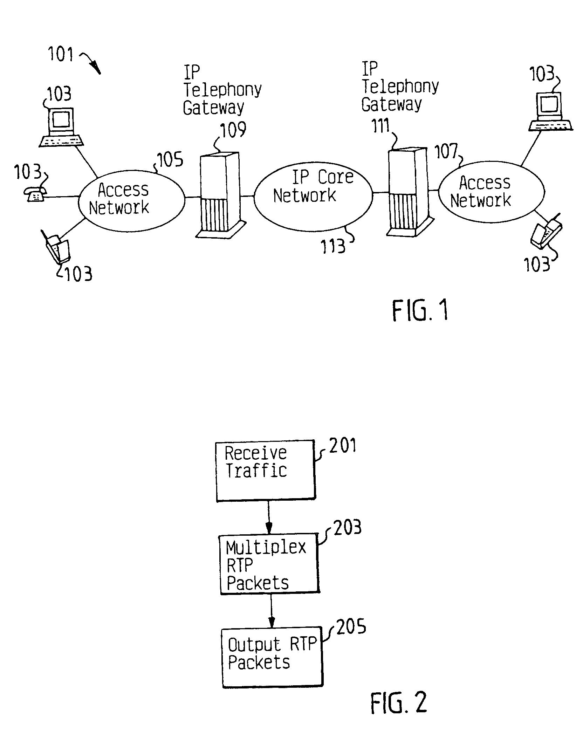

Recently it has been proposed to extend the RTP enabling multiplexing of low bit-rate compressed voice steams from different sources into a single RTP packet. When setting up a call over an Internet Protocol (IP) network, the following steps will then be performed. First a call is initiated from a subscriber over an Access Network (AN), see Fig. 1. The Access Network is connected to an Internet Protocol (IP) telephony gateway, which communicates with other Internet Protocol (IP) telephony gateways over an Internet Protocol (IP) core network.

The gateway, which receives packets from many subscribers multiplexes packets from multiple sources with packets are destined to the same remote Access Network. The packets are multiplexed into a single RTP/UDP (User Datagram Protocol)/IP (Internet Protocol) packet.

In present Internet Protocol (IP) networks a Quality of Service (QoS) differentiation is made on a per IP packet bases. Thus, all voice calls multiplexed together in one RTP/UDP/IP packet will be given the same Quality of Service.

However, this feature of the RTP multiplexing scheme is not always desired. Hence, in a multi-service network it may be required to offer different Quality of Service to different groups of subscribers. These different groups of subscribers will then expect different service levels for their telephone calls.

### SUMMARY

It is an object of the present invention to overcome the problems as outlined above and to provide a method and a system, which provides a mechanism offering differentiation on a per call basis instead of a per IP packet basis.

This object and others are obtained by a method and a system wherein an Internet Protocol (IP) telephony gateway is provided with a function dividing incoming calls into different classes and only multiplexes voice calls belonging to the same class into the same IP packet.

Thus, a subscriber indicates its Quality of Service preference in the call/session level signalling. The IP telephony gateway receives the call and only multiplexes calls into the same IP packet if they have belong to the same Quality of Service class. The differentiation into different classes can for example be performed by marking the IP packets carrying voice traffic with different DSCP values, see S.Blake et al. "An Architecture for Differentiated Services" RFC 2475, December 1998.

The additional logic required in the IP telephony gateway is preferably software implemented making it possible to easily change classes, parameters used in the determination process etc.

### BRIEF DESCRIPTION OF THE DRAWINGS

The present invention will now be described in more detail and with reference to the accompanying drawings, in which:
- Fig. 1 is a general view of an Internet telephony network, and
- Fig. 2 is a flowchart illustrating different steps carried out when receiving Internet Protocol (IP) telephony traffic in an IP telephony gateway.

### DESCRIPTION OF PREFERRED EMBODIMENTS

In Fig. 1, a general view of an Internet telephony network 101 is shown. The network 101 comprises a number of subscribers 103 connected to a number of Access Networks (AN), such as the Access Networks 105 and 107. Each Access Network is connected to an Internet Protocol (IP) telephony gateway. In the example shown in Fig. 1, the Access Network 105 is connected to an IP telephony gateway 109, and the Access Network 107 is connected to an IP telephony gateway 111. The IP telephony gateways 109 and 111 are interconnected by an Internet Protocol (IP) core network 113.

In Fig.2, a flowchart illustrating different steps performed in an IP telephony gateway as shown in Fig. 1, when receiving incoming telephony traffic is shown. Thus, first in a step 201 incoming traffic is received. Next, in a step 203, traffic corresponding to calls requesting the same Quality of Service level are multiplexed into RTP/UDP/IP packets. Finally, in a step 205, the IP packets are output on to the Internet Protocol (IP) core network from the IP telephony gateway.

Also, the method as described herein can be used in other multiplexing schemes such as the scheme described in B. Thompson et al. "Tunnelling Multiplexed Compressed RTP", Internet Draft, March 2000, Work in Progress, according to which a multitude of RTP/UDP/IP packets are compressed and then multiplexed into a so called PPP packet before being transmitted over an IP core network.

Using the method and system as described herein provides a more flexible RTP multiplexing service capable of offering different Quality of Service levels to different subscribers connected to the same IP telephony gateway.

## Claims

1. A system for providing different Quality of Service (QoS) to different subscribers in an Internet Protocol telephony network comprising a multitude of subscribers connected to an Internet telephony gateway, **characterized by:**
- means in the Internet telephony gateway for only multiplexing calls emanating from subscribers requesting the same Quality of service level into the same Internet Protocol (IP) packet.

2. An Internet telephony gateway receiving calls from a multitude of subscribers requesting different Quality of Service (QoS) levels, **characterized by:**
- means for only multiplexing calls emanating from subscribers requesting the same Quality of service level in the same Internet Protocol (IP) packet.

3. A method of providing different Quality of Service (QoS) to different subscribers in an Internet Protocol telephony network comprising a multitude of subscribers connected to an Internet telephony gateway, **characterized by** the steps of:
- receiving incoming calls,
- determining the level of service requested by each call,
- only multiplexing calls emanating requesting the same Quality of service level into the same Internet Protocol (IP) packet, and
- outputting the packets from the IP telephony gateway.
